# FASCICULE DE BREVET EUROPEEN

(11) **EP 4 111 851 B1**
(45) Date de publication et mention de la délivrance du brevet: **29.01.2025**
(21) Numéro de dépôt: 22181569.9
(22) Date de dépôt: 28.06.2022
(51) Int. Cl.: A01G 9/24, A01G 13/06

(54) **PROCÉDÉ ET DISPOSITIF AGRIVOLTAÏQUE DE PROTECTION D'UNE PLANTE CONTRE LE GEL**
VERFAHREN UND AGRIVOLTAIK-VORRICHTUNG ZUM SCHUTZ EINER PFLANZE VOR FROST
AGRIVOLTAIC METHOD AND DEVICE FOR PROTECTING A PLANT AGAINST FREEZING

(30) Priorité: 28.06.2021 FR 2106922
(43) Date de publication de la demande: 04.01.2023
(73) Titulaire: Electricité de France, 75008 Paris (FR)
(72) Inventeur: GRAND, PIERRE-PHILIPPE, 83470 SAINT- MAXIMIN- LA- SAINTE- BAUME (FR); BRIERE, ETIENNE, 91120 PALAISEAU (FR); DUFOSSE, EVE, 78000 VERSAILLES (FR); GUERARD, CEDRIC, 91140 VILLEBON-SUR-YVETTE (FR); DUPUIS, JULIEN, 77590 BOIS-LE-ROI (FR); VAN ISEGHEM, Mike, 77810 THOMERY (FR)
(74) Mandataire: Regimbeau

(56) Documents cités:
- EP-A1- 2 965 618
- CN-U- 205 545 080

## Description

### DOMAINE DE L'INVENTION

La présente invention se rapport au domaine de l'agrivoltaïque.

L'invention concerne plus précisément un dispositif et un procédé de protection d'une plante contre le gel.

### ETAT DE LA TECHNIQUE

Le changement climatique affecte de plus en plus les cultures notamment par alternance de périodes chaudes au printemps, favorable à la sortie des bourgeons et des fleurs, suivies de périodes froides conduisant à des gelées. Si la température descend en dessous de 0°C lorsque les bourgeons sont sortis, ceux-ci peuvent geler et conduire à une réduction drastique de la quantité de culture (raisins, fruits...) pour l'année en cours.

Par définition, une cellule photovoltaïque est un composant électronique dont la fonction est de produire de l'électricité lorsque celles-ci sont exposées à la lumière.

Il a été proposé d'agencer des panneaux comprenant des cellules photovoltaïques assurant cette fonction au-dessus de cultures. Grâce à cette disposition, les panneaux permettent non seulement de produire de l'électricité mais de protéger les cultures d'intempéries.

De tels panneaux s'avèrent en particulier efficaces contre le gel des cultures tant que la température ambiante est d'environ 0°C. Toutefois, en cas de températures inférieures, ces panneaux ne sont plus assez efficaces pour éviter la gelée de bourgeons ou de fleurs.

EP 2 965 618 A1 illustre un état de l'art antérieur.

### EXPOSE DE L'INVENTION

Un but de l'invention est de remédier à la situation exposée ci-dessus.

Il est à cet effet proposé, selon un premier aspect, un dispositif de protection d'une plante contre le gel, selon la revendication 1, le dispositif comprenant :
- un panneau propre à être positionné au-dessus de la plante, le panneau comprenant une cellule photovoltaïque,
- au moins une source capable d'alimenter le panneau avec un courant électrique de sorte que le panneau chauffe par effet joule pendant que la cellule photovoltaïque n'est pas exposée à la lumière.

Le panneau comprend une partie conductrice et non photovoltaïque, telle qu'un cadre métallique entourant la cellule photovoltaïque, le courant électrique étant fourni à ladite partie.

Grâce à la source de courant électrique, l'alimentation du panneau (en particulier du cadre métallique) peut être assurée même par temps couvert ou de nuit, qui sont des conditions météorologiques particulièrement propices au gel de la plante. Au cours de cette alimentation, le panneau s'échauffe par effet Joule, et émet donc de la chaleur à proximité. Cette chaleur émise permet de réchauffer la plante située en dessous de la cellule photovoltaïque, et donc améliore sa résistance au gel.

Le dispositif selon le premier aspect tire parti du fait que le panneau comprenant la cellule photovoltaïque est un élément déjà installé à proximité de la plante dans le but de générer de l'électricité et de protéger la plante contre certaines intempéries, et qui est susceptible de servir d'élément chauffant pour la plante. Ceci est astucieux, car permet de faire l'économie d'un élément chauffant dédié, venant en sus du panneau ; le dispositif proposé est ainsi moins encombrant et plus économique qu'un dispositif qui comporterait un tel élément chauffant dédié.

Le dispositif selon le premier aspect peut également comprendre les caractéristiques optionnelles suivantes, prises seules ou en combinaison chaque fois que cela est techniquement possible.

De préférence, le courant électrique est fourni à la cellule photovoltaïque.

De préférence, la source est une batterie configurée pour être chargée par la cellule photovoltaïque, lorsque la cellule photovoltaïque est exposée à la lumière.

De préférence, le dispositif comprend une interface configurée pour obtenir au moins un paramètre météorologique indicatif de conditions météorologiques subies par la plante, dans lequel la source est configurée pour contrôler l'alimentation du panneau avec le courant électrique en fonction du paramètre météorologique obtenu.

De préférence, le paramètre météorologique comprend une température.

De préférence, la source est configurée pour ne pas alimenter le panneau avec le courant électrique tant que le paramètre météorologique n'a pas franchi un seuil prédéfini.

De préférence, le courant électrique a
- une première intensité lorsque le paramètre météorologique a une première valeur indicative de premières conditions météorologiques subies par la plante, et
- une deuxième intensité supérieure à la première intensité, lorsque le paramètre météorologique a une deuxième valeur indicative de deuxièmes conditions météorologiques plus propices au gel de la plante que les premières conditions météorologiques.

De préférence, la source est configurée pour contrôler l'alimentation du panneau avec le courant électrique en fonction de l'instant courant dans une journée.

De préférence, le panneau comprend une paroi agencée entre la cellule photovoltaïque et l'extérieur du panneau, la paroi étant réalisée dans un matériau polymère.

De préférence, le dispositif comprend une unité de commande configurée pour déplacer le panneau par rapport à la structure selon un déplacement qui augmente une quantité de chaleur transmise par le panneau à la plante.

Il est également proposé, selon un deuxième aspect, un procédé de protection d'une plante contre le gel comprenant l'utilisation d'un dispositif selon l'une des revendications 1-10.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
Les figure 1 et 2 illustrent de façon schématique un dispositif selon un premier mode de réalisation de l'invention.
La figure 3 illustre de façon schématique un dispositif selon un deuxième mode de réalisation de l'invention.

Sur l'ensemble des figures, les éléments similaires portent des références identiques.

### DESCRIPTION DETAILLEE DE L'INVENTION

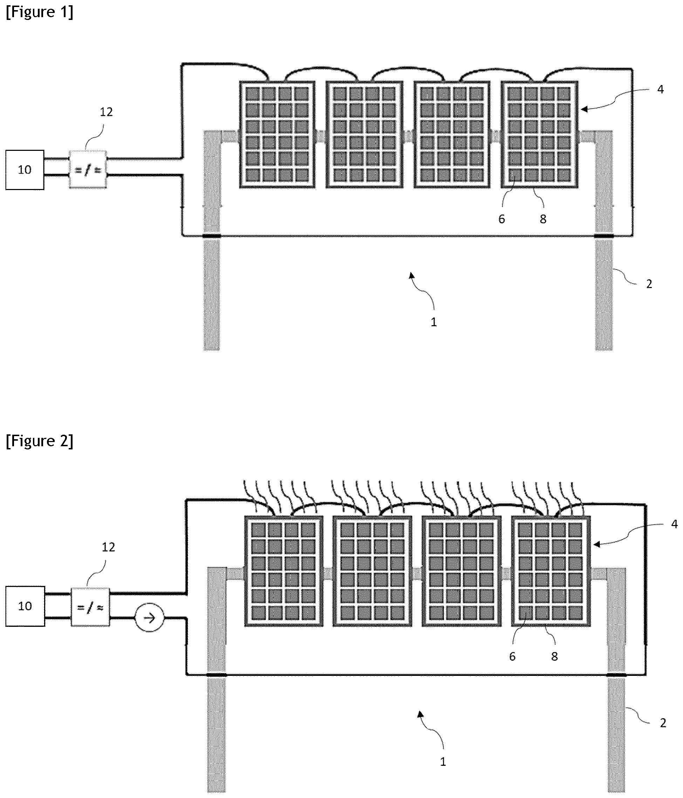

En référence à la **figure 1****,** un dispositif 1 de protection d'une plante contre le gel comprend une structure 2 propre à être fixée au sol, et un panneau 4 mobile par rapport à la structure.

La structure 2 comprend un ou plusieurs mâts destinés à s'étendre verticalement par rapport au sol, par exemple deux mâts ou plus. La structure 2 comprend par ailleurs une traverse destinée à s'étendre horizontalement par rapport au sol.

Le panneau 4 est monté mobile sur la structure 2, de manière à surplomber le sol et en particulier une plante qui pousse depuis ce sol. Le panneau 4 est par exemple monté sur la traverse. Le panneau 4 est par exemple monté à rotation sur la structure 2 sur un ou deux axes de rotations, mais d'autres types de montages peuvent être envisagés, par exemple en translation selon une direction verticale par rapport au sol.

Le panneau 4 comprend au moins une cellule photovoltaïque 6. Conformément à la définition donnée en introduction, la cellule photovoltaïque 6 est un composant électronique connu, dont la fonction est de produire de l'électricité lorsque celle-ci est exposée à la lumière.

Le panneau 4 peut comprendre plusieurs cellules photovoltaïques 6. Dans le mode de réalisation représenté en figure 1, le panneau 4 comprend 24 cellules photovoltaïques agencées en damier de dimensions 4x6.

Le panneau 4 présente une première face, et une deuxième face opposée à la première face.

Le panneau 4 comprend également d'autres parties qui ne sont pas des cellules photovoltaïques (dans le sens où ces parties ne produisent pas d'électricité lorsqu'exposées à la lumière).

En particulier, le panneau 4 comprend une première paroi s'étendant entre la première face et chaque cellule photovoltaïque 6, et une deuxième paroi s'étendant entre la deuxième face et chaque cellule photovoltaïque 6. Autrement dit, chaque cellule photovoltaïque 6 est agencée entre la première paroi et la deuxième paroi.

La première paroi est transparente. Ainsi, chaque cellule photovoltaïque 6 est agencée pour recevoir de la lumière ayant pénétré dans le panneau par la première face.

La deuxième paroi peut être transparente, auquel cas chaque cellule photovoltaïque 6 est capable de recevoir de la lumière ayant pénétré dans le panneau par la deuxième face (on parle alors de panneau « biface »). Alternativement, la deuxième paroi est opaque (on parle alors de panneau « monoface »).

La première paroi et/ou la deuxième paroi peut être réalisée en verre ou bien dans un matériau polymère. Un matériau polymère présente l'avantage de favoriser en général une dissipation de chaleur par effet joule vers l'extérieur du panneau 4.

Le panneau 4 peut également comprendre un cadre métallique 8 entourant la ou chaque cellule photovoltaïque 6, et le cas échéant la première paroi et/ou la deuxième paroi précitées.

Le cadre 8 est typiquement en aluminium, qui est un très bon conducteur thermique. En variante, le cadre 8 peut être réalisé dans un métal ou un alliage plus résistif (acier, nickel/chrome, etc.).

Le dispositif 1 comprend par ailleurs une source de courant électrique 10 capable d'alimenter le panneau 4 avec un courant électrique de sorte que le panneau chauffe par effet joule.

La source de courant électrique 10 a la particularité d'être capable de fournir au panneau 4 un tel courant électrique non seulement lorsque le panneau 4 est exposé à la lumière, mais également lorsque le panneau 4 n'est pas exposé à la lumière. Ainsi, la source de courant électrique 10 n'est pas en elle-même une cellule photovoltaïque 6.

Différentes parties du panneau 4 peuvent être alimentées en courant électrique par la source de courant électrique 10 : le cadre métallique 8, et optionnellement au moins une de ses cellules photovoltaïques 6 et/ou d'autres parties conductrices du panneau 4.

La source de courant électrique 10 est externe au panneau 4.

La source de courant électrique 10 est une batterie, par exemple de type lithium-ion.

La batterie est par exemple agencée dans un mât de la structure 2.

Bien entendu, le dispositif 1 peut comprendre des panneaux supplémentaires présentant les mêmes caractéristiques que le panneau 4 (le mode de réalisation illustré en figure 1 en comprend quatre panneaux). Dans ce cas, les différents panneaux peuvent être montés à rotation sur la structure 2, leurs axes de rotation respectifs étant parallèles. Par ailleurs, les différents panneaux 4 et la source de courant électrique 10 sont montés en série.

De préférence, la batterie est configurée pour être chargée par au moins une cellule photovoltaïque 6 lorsque celle-ci est exposée à la lumière. Ainsi, la batterie peut emmagasiner une partie de l'énergie produite par un panneau du dispositif, avant de restituer cette énergie de manière différée au panneau 4, à un moment où le dispositif 1 se trouve dans l'obscurité ou tout du moins lorsque le dispositif 1 n'est plus exposé à une lumière en quantité suffisante pour produire de l'électricité à partir de lumière (par temps couvert ou de nuit par exemple).

Le dispositif 1 peut également comprendre un onduleur 12 lorsque la source est une source de courant continu. L'onduleur a pour fonction de convertir le courant électrique continu généré par la source en un courant électrique alternatif, et d'alimenter le panneau 4 avec ce courant alternatif. Par ailleurs, lorsque la source 10 est une batterie, l'onduleur convertit en courant continu le courant électrique alternatif généré par le panneau 4 exposé à la lumière, et charge la batterie avec ce courant continu.

Le dispositif 1 peut en outre comprend au moins des composants supplémentaires suivants, alimentés électriquement par la source 10 ou une autre source :
- un élément chauffant (cordon, câble ou panneau par exemple) positionné ou enroulé autour du mat ou autour d'une brique réfractaire à base de vermiculite qui elle-même peut être positionnée au pied de la plante.
- un ventilateur ou élément tournant de brassage de l'air ambiant, installé sur le mat des panneaux ou au pied de la plante.
- une lampe chauffante installée sur le mat ou au pied de la plante, comme celles utilisées dans les couveuses ou les terrariums. Une lampe chauffante en céramique ou infra rouge, basse consommation, émettant très peu de lumière et à bonne durée de vie, pourra avantageusement être utilisée.

Ces composants supplémentaires constituent des moyens améliorant les performances de protection de la plante contre le gel par le dispositif 1.

Un procédé d'utilisation du dispositif 1 est le suivant : la source 10 est activée, de sorte à générer un courant électrique. Ce courant électrique est fourni au panneau 4, lequel chauffe par effet joule. La chaleur générée par cet effet jour se dissipe à l'extérieur du panneau 4, comme indiqué en **figure 2****.** En particulier, cette chaleur chauffe l'environnement proche du panneau 4, et en particulier l'environnement près de la plante qui se trouve en dessous du panneau 4. Ce chauffage améliore la protection de la plante contre le gel.

De préférence, le dispositif 1 est utilisé de la sorte pendant la nuit, car c'est pendant la nuit que les risques de gel sont les plus importants.

Afin de d'améliorer encore la protection de la plante contre le gel, il peut être prévu de déplacer le panneau 4 par rapport à la structure, de sorte que davantage de chaleur dissipée par le panneau atteigne la plante. Ce déplacement peut en particulier consister à rapprocher le panneau 4 de la plante en l'abaissant, lorsque le panneau est monté en translation verticale sur la structure. Lorsque le panneau 4 est monté en rotation, ce déplacement peut être une rotation vers une orientation dans laquelle une face du panneau qui dissipe le plus de chaleur se trouve en regard de la plante (vers le bas). Le dispositif 1 peut comprendre une unité de commande des panneaux 4 configurée pour déplacer le panneau 4 de la sorte. Ce déplacement peut être réalisé avant que la source 10 n'alimente le panneau en courant électrique, ou pendant cette alimentation.

L'alimentation en courant électrique du panneau 4 par la source 10 peut être contrôlée automatiquement, et ce de différentes manières.

Dans un mode de réalisation, le dispositif 1 comprend ou est connecté à une horloge déterminant l'instant courant dans une journée. Cet instant courant est par exemple exprimé à l'heure près, à la minute près ou à la seconde près. L'alimentation en courant électrique du panneau 4 est alors contrôlée en fonction de l'instant courant déterminé par l'horloge. Il est ainsi possible de définir différentes plages horaires au cours associées à des paramètres d'alimentation en courant différents. Par exemple, le courant électrique fourni par la source 10 peut avoir :
- une première intensité pendant une première plage horaire dans une journée, et
- une deuxième intensité supérieure de la première intensité pendant une deuxième plage horaire de la journée

La première page horaire peut être une plage de jour et la deuxième plage horaire être une page de nuit.

Il peut être envisagé que la première intensité soit nulle. Dans ce cas, la source de courant électrique ne cause une dissipation de chaleur par effet joule au sein du panneau que pendant une partie de la journée. En variante, la première intensité n'est pas nulle.

Dans un autre mode de réalisation, le dispositif 1 comprend une interface configurée pour obtenir au moins un paramètre météorologique indicatif de conditions météorologiques subies par la plante. La source de courant électrique 10 est alors est configurée pour contrôler l'alimentation du panneau 4 en fonction du ou de chaque paramètre météorologique obtenu.

L'interface peut être une interface de communication avec un serveur distant fournissant le ou chaque paramètre météorologique. En variante, l'interface est un capteur qui mesure localement le ou chaque paramètre considéré. Ce capteur peut être positionné au pied de la plante.

La source de courant électrique 10 peut ne pas alimenter le panneau avec un courant électrique tant que le paramètre météorologique n'a pas franchi un seuil prédéfini. Autrement dit, la source 10 n'alimente le panneau avec un courant électrique qu'une fois que ce paramètre a franchi ce seuil.

Un paramètre météorologique particulièrement avantageux pour contrôler l'alimentation en courant électrique du panneau par la source est une température mesurée à proximité de la plante. En effet, ce paramètre est très pertinent pour évaluer un risque de gel de la plante.

Ainsi, la source 10 peut alimenter le panneau en courant électrique uniquement lorsque la température est dessous d'un certain seuil de température, par exemple 0 degrés Celsius.

Alternativement, le courant électrique fourni par la source peut être ajusté à :
- une première intensité lorsqu'un paramètre météorologique obtenu a une première valeur indicative de premières conditions météorologiques subies par la plante, et
- une deuxième intensité supérieure à la première intensité, lorsque le paramètre météorologique obtenu a une deuxième valeur indicative de deuxièmes conditions météorologiques plus propices au gel de la plante que les premières conditions météorologiques.

Dans cette variante, l'intensité du courant peut être modulée. Lorsque la température est utilisée comme paramètre météorologique, il peut être fait en sorte que la source fournit un courant électrique au panneau dont l'intensité croît lorsque la température décroît.

Des paramètres autres que la température peuvent être utilisées pour contrôler l'alimentation du panneau en courant électrique par la source 10, tel que l'hygrométrie ambiante à proximité de la plante.

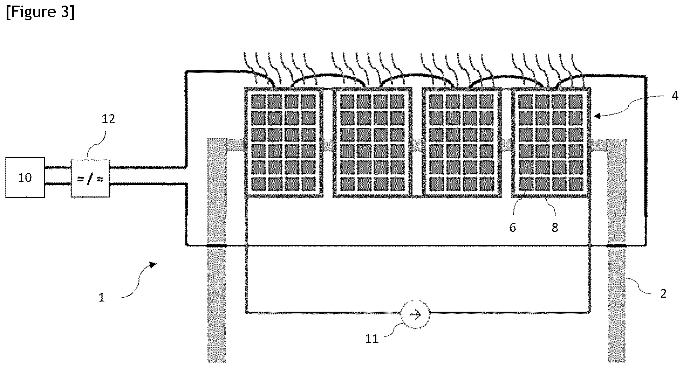

Dans ce qui précède, il a été décrit un dispositif 1 dans lequel une seule et même source de courant électrique 10 est capable d'alimenter différentes parties du panneau 6 en courant électrique. Il est toutefois envisageable de prévoir plusieurs sources de courant électriques alimentant différentes parties du panneau, par exemple une première source 10 qui alimente les cellules photovoltaïques 6, et une deuxième source 11, qui alimente le cadre 8, comme représenté en **figure 3****.**

## Revendications

1. Dispositif (1) de protection d'une plante contre le gel, le dispositif (1) comprenant :
- un panneau (4) propre à être positionné au-dessus de la plante, le panneau comprenant une cellule photovoltaïque (6) et un cadre métallique (8) entourant la cellule photovoltaïque, le cadre métallique (8) étant une partie conductrice et non photovoltaïque,
- au moins une source (10) capable d'alimenter le cadre métallique (8) avec un courant électrique pendant que la cellule photovoltaïque n'est pas exposée à la lumière, de sorte que le cadre métallique (8) chauffe par effet joule.

2. Dispositif (1) selon la revendication 1, dans lequel le courant électrique est fourni à la cellule photovoltaïque (6).

3. Dispositif (1) selon l'une des revendications 1 et 2, dans lequel la source (10) est une batterie configurée pour être chargée par la cellule photovoltaïque (6), lorsque la cellule photovoltaïque (6) est exposée à la lumière.

4. Dispositif (1) selon l'une des revendications 1 à 3, comprenant une interface configurée pour obtenir au moins un paramètre météorologique indicatif de conditions météorologiques subies par la plante, dans lequel la source est configurée pour contrôler l'alimentation du panneau avec le courant électrique en fonction du paramètre météorologique obtenu.

5. Dispositif (1) selon la revendication 4, dans lequel le paramètre météorologique comprend une température.

6. Dispositif (1) selon l'une des revendications 4 et 5, dans lequel la source (10) est configurée pour ne pas alimenter le panneau (4) avec le courant électrique tant que le paramètre météorologique n'a pas franchi un seuil prédéfini.

7. Dispositif (1) selon l'une des revendications 4 à 6, dans lequel le courant électrique a
- une première intensité lorsque le paramètre météorologique a une première valeur indicative de premières conditions météorologiques subies par la plante, et
- une deuxième intensité supérieure à la première intensité, lorsque le paramètre météorologique a une deuxième valeur indicative de deuxièmes conditions météorologiques plus propices au gel de la plante que les premières conditions météorologiques.

8. Dispositif (1) selon l'une des revendications 1 à 7, comprenant une horloge configurée pour déterminer un instant courant dans une journée, dans lequel la source (10) est configurée pour contrôler l'alimentation du panneau (4) avec le courant électrique en fonction de l'instant courant dans la journée.

9. Dispositif (1) selon l'une des revendications 1 à 8, dans lequel le panneau (4) comprend une paroi agencée entre la cellule photovoltaïque et l'extérieur du panneau (4), la paroi étant réalisée dans un matériau polymère.

10. Dispositif (1) selon l'une des revendications 1 à 9, comprenant par ailleurs une unité de commande configurée pour déplacer le panneau par rapport à la structure selon un déplacement qui augmente une quantité de chaleur transmise par le panneau (4) à la plante.

11. Procédé de protection d'une plante contre le gel comprenant l'utilisation d'un dispositif selon l'une des revendications précédentes.

## Patentansprüche

1. Vorrichtung (1) zum Schutz einer Pflanze vor Frost, wobei die Vorrichtung (1) umfasst :
- eine Platte (4), die geeignet ist, über der Pflanze positioniert zu werden, wobei die Platte eine photovoltaische Zelle (6) und einen Metallrahmen (8) umfasst, der die photovoltaische Zelle umgibt, wobei der Metallrahmen (8) ein leitender und nicht photovoltaischer Teil ist,
- mindestens eine Quelle (10), die den Metallrahmen (8) mit elektrischem Strom versorgen kann, während die photovoltaische Zelle nicht dem Licht ausgesetzt ist, so dass der Metallrahmen (8) durch Joule-Effekt erwärmt wird .

2. Vorrichtung (1) nach Anspruch 1, wobei der elektrische Strom der photovoltaischen Zelle (6) zugeführt wird.

3. Vorrichtung (1) nach einem der Ansprüche 1 oder 2, wobei die Quelle (10) eine Batterie ist, die so konfiguriert ist, dass sie durch die photovoltaische Zelle (6) aufgeladen wird, wenn die photovoltaische Zelle (6) Licht ausgesetzt ist.

4. Vorrichtung (1) nach einem der Ansprüche 1 bis 3, mit einer Schnittstelle, die so konfiguriert ist, dass sie mindestens einen meteorologischen Parameter erhält, der auf die Wetterbedingungen hinweist, denen die Pflanze ausgesetzt ist, wobei die Quelle so konfiguriert ist, dass sie die Versorgung des Panels mit elektrischem Strom in Abhängigkeit von dem erhaltenen meteorologischen Parameter steuert.

5. Vorrichtung (1) nach Anspruch 4, wobei der meteorologische Parameter eine Temperatur umfasst.

6. Vorrichtung (1) nach einem der Ansprüche 4 oder 5, wobei die Quelle (10) so konfiguriert ist, dass sie die Tafel (4) erst dann mit elektrischem Strom versorgt, wenn der Wetterparameter einen vordefinierten Schwellenwert überschritten hat.

7. Vorrichtung (1) nach einem der Ansprüche 4 bis 6, wobei der elektrische Strom
- eine erste Intensität hat, wenn der Wetterparameter einen ersten Wert hat, der auf erste Wetterbedingungen hinweist, denen die Pflanze ausgesetzt ist, und
- eine zweite Intensität, die größer ist als die erste Intensität, wenn der Wetterparameter einen zweiten Wert hat, der auf zweite Wetterbedingungen hinweist, die für das Einfrieren der Pflanze günstiger sind als die ersten Wetterbedingungen.

8. Vorrichtung (1) nach einem der Ansprüche 1 bis 7, mit einer Uhr, die so konfiguriert ist, dass sie einen aktuellen Zeitpunkt an einem Tag bestimmt, wobei die Quelle (10) so konfiguriert ist, dass sie die Versorgung der Tafel (4) mit elektrischem Strom in Abhängigkeit von dem aktuellen Zeitpunkt an dem Tag steuert.

9. Vorrichtung (1) nach einem der Ansprüche 1 bis 8, wobei die Platte (4) eine Wand umfasst, die zwischen der photovoltaischen Zelle und der Außenseite der Platte (4) angeordnet ist, wobei die Wand aus einem Polymermaterial hergestellt ist.

10. Vorrichtung (1) nach einem der Ansprüche 1 bis 9, die außerdem eine Steuereinheit umfasst, die so konfiguriert ist, dass sie das Paneel relativ zu der Struktur in einer Bewegung bewegt, die eine Wärmemenge erhöht, die von dem Paneel (4) auf die Pflanze übertragen wird.

11. Verfahren zum Schutz einer Pflanze vor Frost, das die Verwendung einer Vorrichtung nach einem der vorhergehenden Ansprüche umfasst.

## Claims

1. A device (1) for protecting a plant against frost, the device (1) comprising:
- a panel (4) suitable for positioning above the plant, the panel comprising a photovoltaic cell (6) and a metal frame (8) surrounding the photovoltaic cell, the metal frame (8) being a conductive and non-photovoltaic part,
- at least one source (10) capable of supplying the metal frame (8) with an electric current while the photovoltaic cell is not exposed to light, so that the metal frame (8) heats by Joule effect .

2. Device (1) according to claim 1, in which the electric current is supplied to the photovoltaic cell (6).

3. A device (1) according to one of claims 1 and 2, wherein the source (10) is a battery configured to be charged by the photovoltaic cell (6), when the photovoltaic cell (6) is exposed to light.

4. A device (1) according to any one of claims 1 to 3, comprising an interface configured to obtain at least one meteorological parameter indicative of weather conditions experienced by the plant, wherein the source is configured to control the supply of electric current to the panel as a function of the obtained meteorological parameter.

5. Device (1) according to claim 4, wherein the meteorological parameter comprises a temperature.

6. Device (1) according to one of claims 4 and 5, in which the source (10) is configured not to supply the panel (4) with electric current until the meteorological parameter has exceeded a predefined threshold.

7. A device (1) according to one of claims 4 to 6, wherein the electric current has
- a first intensity when the meteorological parameter has a first value indicative of first weather conditions experienced by the plant, and
- a second intensity higher than the first intensity, when the meteorological parameter has a second value indicative of second weather conditions more conducive to plant freezing than the first weather conditions.

8. A device (1) according to one of claims 1 to 7, comprising a clock configured to determine a current time in a day, wherein the source (10) is configured to control the supply of the panel (4) with electric current in dependence on the current time in the day.

9. Device (1) according to one of claims 1 to 8, wherein the panel (4) comprises a wall arranged between the photovoltaic cell and the outside of the panel (4), the wall being made of a polymer material.

10. Device (1) according to one of claims 1 to 9, further comprising a control unit configured to move the panel relative to the structure according to a displacement which increases an amount of heat transmitted by the panel (4) to the plant.

11. A method of protecting a plant against frost comprising the use of a device according to one of the preceding claims.
